# EUROPEAN PATENT APPLICATION

(11) **EP 3 829 109 A1**
(43) Date of publication of application: **02.06.2021**
(21) Application number: 18928757.6
(22) Date of filing: 26.09.2018
(51) Int. Cl.: H04L 12/24, H04L 12/26

(54) **TRAFFIC FEATURE MANAGEMENT METHOD AND APPARATUS, AND CENTRAL NODE SERVER**

(30) Priority: 30.07.2018 CN 201810852703
(71) Applicant: Wangsu Science & Technology Co., Ltd., Shanghai 200030 (CN)
(72) Inventor: HUANG, Zhihui, Shanghai 200030 (CN)
(74) Representative: de Arpe Fernandez, Manuel
(86) International application number: PCT/CN2018/107477
(87) International publication number: WO 2020/024402

(57) **Abstract**

The present disclosure describes a method, apparatus, and central node server for managing traffic features. The method includes: after receiving a traffic feature sent by a traffic identification device, querying feature information associated with the traffic feature, wherein the feature information includes at least a first field for recording a time point of latest successful verification of the traffic feature and a second field for recording a warning time interval threshold, and updating content in the first field;performing a timeliness detection task for the traffic feature, and determining a time difference between a time point when the timeliness detection task is performed and the time point recorded in the first field; and if the time difference is greater than the warning time interval threshold recorded in the second field, issuing a warning of invalidation of the traffic feature to a management server, to allow the management server to update traffic feature data. The technical solutions provided by the present disclosure may improve the efficiency of inspecting traffic features.

## Description

### FIELD OF DISCLOSURE

The present disclosure generally relates to the field of Internet technology and, more particularly, relates to a method, apparatus,and central node server for managing traffic features.

### BACKGROUND

Currently, there are a large variety of applications. When users use an application,corresponding network traffic may be generated.For different applications, traffic features included in the generated network traffic are recognizable. The traffic features may be used to identify a certain application from which the network traffic is initiated. Specifically, the traffic features may include, but are not limited to, name information, a specific operation identifier, specific message field information of an application, and so on.

In the existing technologies, identifying an application to which the network traffic belongs based on the traffic feature has been widely used, especially in the field of network acceleration services. For example, gaming-type applications usually have a requirement for a high quality of network communication. Therefore, after a network operator or a third-party acceleration platform recognizes that certain network traffic belongs to network traffic generated by the gaming-type applications, this portion of network traffic may be dispatched to the network nodes with a relatively high quality of network communication, so as to ensure smooth online gaming.

In real applications, the traffic features and corresponding information are often collectively stored in a database(s) for maintenance. For the reasons of an application update, upgrade, etc., the feature of network traffic generated from an application may also change. Therefore, an existing traffic feature may lose its validity. To address this problem, in general, the traffic features of all applications are managed by using a method of periodical inspection. However, the workload consumed by this kind of management is quite large. In addition, for certain applications that are not frequently updated, there is no need to take time to inspect the traffic features of these applications every time.

As can be seen, the current methods for managing traffic features include many meaningless inspecting processes, which results in low efficiency.

### BRIEF SUMMARY OF THE DISCLOSURE

The objective of the present disclosure is to provide a method, apparatus, and central node server for managing traffic features, which may improve the efficiency of inspecting traffic features.

To achieve the above objective, in one aspect, the present disclosure provides a method for managing traffic features. The method includes: after receiving a traffic feature sent by a traffic identification device, querying feature information associated with the traffic feature, where the feature information includes at least a first field for recording a time point of latest successful verification of the traffic feature and a second field for recording a warning time interval threshold, and updating content in the first field;performing a timeliness detection task for the traffic feature, and determining a time difference between a time point when the timeliness detection task is performed and the time point recorded in the first field; and if the time difference is greater than the warning time interval threshold recorded in the second field, issuing a warning of invalidation of the traffic feature to a management server, to allow the management server to update traffic feature data.

To achieve the above objective, in another aspect, the present disclosure further provides a central node server. The central node server runs a system for managing traffic features, where the system may implement the foregoing method.

To achieve the above objective, the present disclosure further provides an apparatus for managing traffic features. The apparatus includes a management server, a central node server, and at least one traffic identification device, where:the management server is configured to issue traffic feature data to the central node server and each traffic identification device, receive a warning of invalidation sent by the central node server, and update the traffic feature data;a traffic identification device is configured to identify locally received user traffic based on the traffic feature data, and report a matching traffic feature to the central node server when identification is successful; and the central node server is configured to issue a warning of invalidation to the management server when an invalid traffic feature is detected.

As can be seen from the above, in the technical solutions provided by the present disclosure, a traffic feature generated by an application in a user client may be identified through a traffic identification device. In the present disclosure, different traffic may be uniquely represented by different feature identifiers. After identifying a feature identifier of the traffic feature, the traffic identification device may transmit the feature identifier to a central node server. The central node server may store feature information associated with various feature identifiers. The feature information may include multiple fields, where each field may be filled with different information. For example, the feature information may include a first field for recording a time point of the latest successful verification of a traffic feature and a second field for recording a warning time interval threshold. When determining whether the traffic feature is invalid, a timeliness detection task may be performed for the traffic feature, and a time difference between the time point when the timeliness detection task is performed and the time point recorded in the first field is determined. The time difference may be used to indicate an accumulated time length that the traffic feature has not been triggered by a user client. When the time difference is greater than the warning time interval threshold recorded in the second field, it indicates that the traffic feature has not been triggered by a user client for a long time, and this traffic feature may be already invalid. At this point, the central node server may issue a warning of invalidation of the traffic feature to the management server. Subsequently, the management server may perform a further validity inspection process for the traffic feature for which the warning of invalidation was issued. For the traffic for which no warning of invalidation is issued, the validity inspection process may not be performed. It can be seen that, by maintaining the feature information of the traffic and comparing the time difference, the present disclosure may determine traffic that may be invalid, and then perform a validity inspection for the traffic that may be invalid without necessarily performing a validity inspection for all traffic, thereby reducing the time used for the traffic inspection and improving efficiency of traffic inspection.

### BRIEF DESCRIPTION OF THE DRAWINGS

To make the technical solutions in the embodiments of the present disclosure clearer, a brief introduction of the accompanying drawings consistent with descriptions of the embodiments will be provided hereinafter. It is to be understood that the following described drawings are merely some embodiments of the present disclosure. Based on the accompanying drawings and without creative efforts, persons of ordinary skill in the art may derive other drawings.
FIG. 1 is a schematic diagram of a network architecture according to some embodiments of the present disclosure;
FIG. 2 is a flowchart of a method for managing traffic features according to some embodiments of the present disclosure;
FIG. 3 is a processing flow of a method for managing traffic features according to some embodiments of the present disclosure;
FIG. 4 is a functional block diagram of a central node server according to some embodiments of the present disclosure; and
FIG. 5 is a schematic structural diagram of a computer terminal according to some embodiments of the present disclosure.

### DETAILED DESCRIPTION

To make the objective, technical solutions, and advantages of the present disclosure clearer, the implementations of the present disclosure will be made in detail hereinafter with reference to the accompanying drawings.

### Embodiment 1

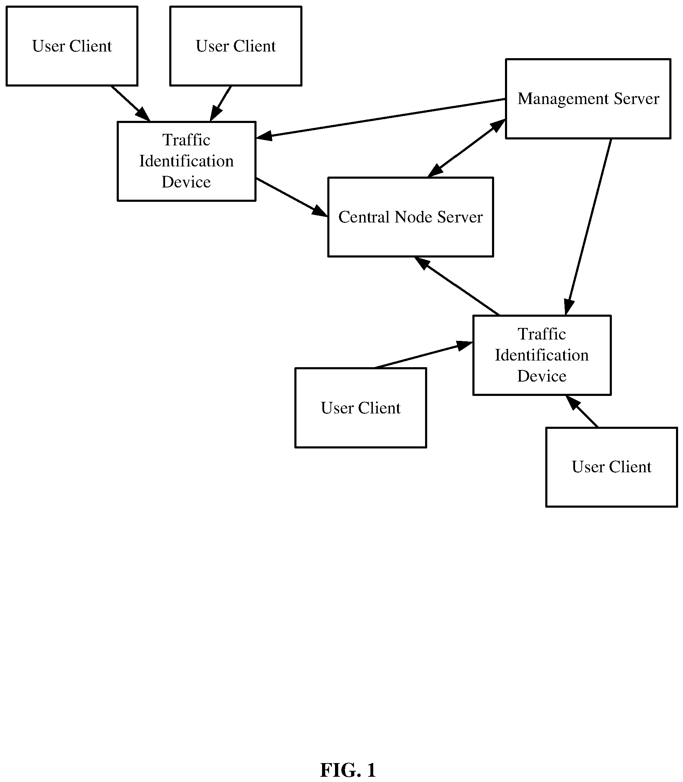

The present disclosure provides a method for managing traffic features. The method may be applied to a central node server. Referring to FIG. 1, the network architecture involved in the present disclosure may include a management server, a central node server (referred to as a "central node"), traffic identification devices, and user clients.Here, the management server may store traffic features of network traffic of applications. Different traffic features may correspond to network traffic from different applications. For network traffic of different applications, the management server may collect corresponding traffic features in advance and assign a feature identifier to each traffic feature. A feature identifier may uniquely identify the corresponding traffic feature. In this way, an association relationship may be established between a traffic feature and a feature identifier. A combination of an application, a traffic feature, and the corresponding feature identifier may be considered as the traffic feature data, which is stored in the management server.

In real applications, the management server may issue the traffic feature data to the central node server and each traffic identification device in advance, so that traffic features or corresponding feature identifiers may be identified by the central node server and each traffic identification device.

Various applications may be run on a user client. During the running process, these applications may generate corresponding network traffic. The network traffic may be received by a traffic identification device, and the corresponding traffic features may be identified by the traffic identification device. Specifically, the traffic identification device may receive traffic feature data issued by the management server. Thereafter, for current network traffic sent by the user client, the traffic identification device may perform a matching between the feature included in the current network traffic and various traffic features included in the traffic feature data, and use the matching traffic feature as the traffic feature corresponding to the current network traffic. The traffic identification device may be, for example, a DPI (Deep Packet Inspection) device or other devices with a traffic identification function. The traffic feature or the corresponding feature identifier identified by the traffic identification device may be uploaded to the central node to allow the traffic feature to be managed by the central node.

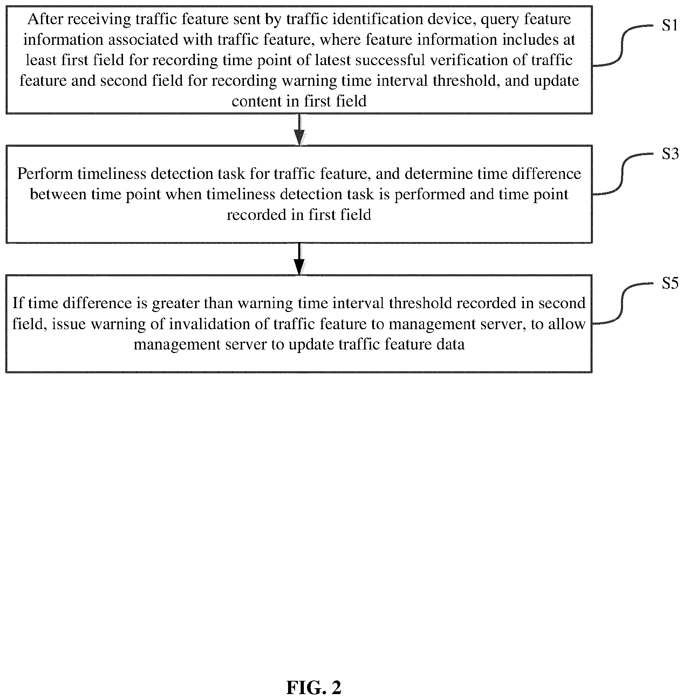

Referring to FIG. 2, the method for managing traffic features provided by the present disclosure may include the following steps.

S1: After receiving a traffic feature sent by a traffic identification device, query feature information associated with the traffic feature, where the feature information includes at least a first field for recording a time point of the latest successful verification of the traffic feature and a second field for recording a warning time interval threshold; and update content in the first field.

In the disclosed implementation, the traffic identification device may receive traffic feature data sent by the management server.Afterwards, for the current network traffic sent by the user client, the traffic identification device may perform a matching between the traffic feature included in the current network traffic and various traffic features included in the traffic feature data.The traffic identification device may use the matching traffic feature as the traffic feature corresponding to the current network traffic, so as to determine an application that sends the current network traffic.

Specifically, the traffic feature may include, but is not limited to, a network protocol type, a length of specific bytes of a data packet, application name information of a specific field, and the like. After the traffic identification device has determined the matching traffic feature of the network traffic, the traffic feature may be uploaded to the central node server.

In the disclosed implementation,feature information may be also constructed for the traffic feature. The feature information may record certain information that reflects the traffic feature. The feature information of each traffic feature may be stored, in association with the feature identifier, in the central node server.

In real applications, the feature information may include multiple fields. Specifically, referring to Table 1, the feature information may include a first field for recording a time point of the latest successful verification of the traffic feature, and a second field for recording a warning time interval threshold.

**Table 1: Schematic Table of Feature Information**

| Fields | First Field | Second Field | Third Field |
|---|---|---|---|
| Functions | time point of the latest successful verification | record a warning time interval threshold | whether the traffic feature is valid |

Further, the feature information also includes a third field for indicating whether the traffic feature is valid.

Apparently, in real applications, based on the specific requirements,more fields may be added or some of the current fields may be removed, which the present disclosure is not intended to limit.

In the disclosed implementation, after receiving the traffic feature uploaded by the traffic identification device, the central node may read the feature information associated with the traffic feature, and parse the content currently recorded in each field of the feature information.

In the disclosed implementation, at the beginning of constructing the feature information, the content recorded in each field of the feature information may be initialized. Specifically, for the first field, the time point when the feature information was constructed may be used as the time point of the latest successful verification of the traffic feature. For the second field, an empirical value may be used as the preset warning time interval threshold. This empirical value may be considered as an average time length for an application to trigger the network traffic. For example, the empirical value may be set to seven days, indicating that,on average,the application will trigger network traffic at least once every seven days. For the third field, the initial content may be set to "valid". It should be noted that the content in each of the foregoing fields may be updated in real time as the subsequent steps proceed.

In the disclosed implementation, after querying the feature information associated with the traffic feature, the central node may set the content in each field of the feature information according to the current real situation. Specifically, since the central node receives the traffic feature reported by the traffic identification device, it indicates that the traffic feature is currently valid.At this moment, the content in the first field may be updated.

In real applications, when the content in the first field is being updated, the content in the first field may be updated to a time point when the traffic feature was received. By using such an update method, the content in the first field may be easily updated.

However, in some scenarios, the time point when the central node receives the traffic feature may be inconsistent with the time point when the traffic identification device reports the traffic feature. For example, after the traffic identification device reports the traffic feature, the reporting request may be affected by the network conditions, which causes a certain time delay. As a result, the time point when the central node receives the traffic feature will be later than the time point when the traffic identification device reported the traffic feature. At this point, when reporting the traffic feature, the traffic identification device may also include, in the reported information,the time point when the traffic feature is being reported. In order to improve accuracy of the content in the first field, after receiving the information reported by the traffic identification device, the central node may extract,from the reported information,the time point when the traffic identification device reported the traffic feature, and update the content in the first field to a time point when the traffic identification device reports the traffic feature.

In some scenarios, after the corresponding traffic feature is matched based on the traffic feature data in the local, the traffic identification device may not report the traffic feature to the central node immediately, but rather report all matching traffic features altogether according to a periodical time interval. In such a situation, when reporting the traffic feature,the traffic identification device may also include,in the reported information,the time point when the traffic feature was successfully matched. In this way, in order to improve accuracy of the content in the first field, the central node may extract,from the information reported by the traffic identification device,the time point of matching when the traffic feature was successfully matched, and update the content in the first field to the time point of matching.

In addition, since the traffic feature is triggered properly, it indicates that the traffic feature is not invalid. At this moment, the central node may also set the content in the third field to the content indicating that the traffic feature is currently valid.

S3: Perform a timeliness detection task for the traffic feature, and determine a time difference between a time point when the timeliness detection task is performed and a time point recorded in the first field.

S5: If the time difference is greater than the warning time interval threshold recorded in the second field, issue a warning of invalidation of the traffic feature to the management server, to allow the management server to update the traffic feature data.

In the disclosed implementation, the central node may initiate a periodical inspection task in advance. The purpose of the periodical inspection task is to perform traffic validity inspection on the traffic features reported by the traffic identification devices according to a specified time interval. After the periodical inspection task is initiated, it will be put in operation.

When the periodical inspection task is in operation, the central node may perform a timeliness detection task based on the specified time interval. The specified time interval may be set according to actual needs, for example, it may be set to one second. Accordingly, when the periodical inspection task is initiated, the central node may perform the timeliness detection task after each second.

It should be noted that the process of performing the timeliness detection task by the central node has nothing to do with the process of whether the traffic feature reported by the traffic identification device has been currently received. That is, the timeliness detection task performed by the central node is only for traffic features stored in the central node. The purpose of performing the timeliness detection task is to determine whether a currently stored traffic feature is still in a valid state.

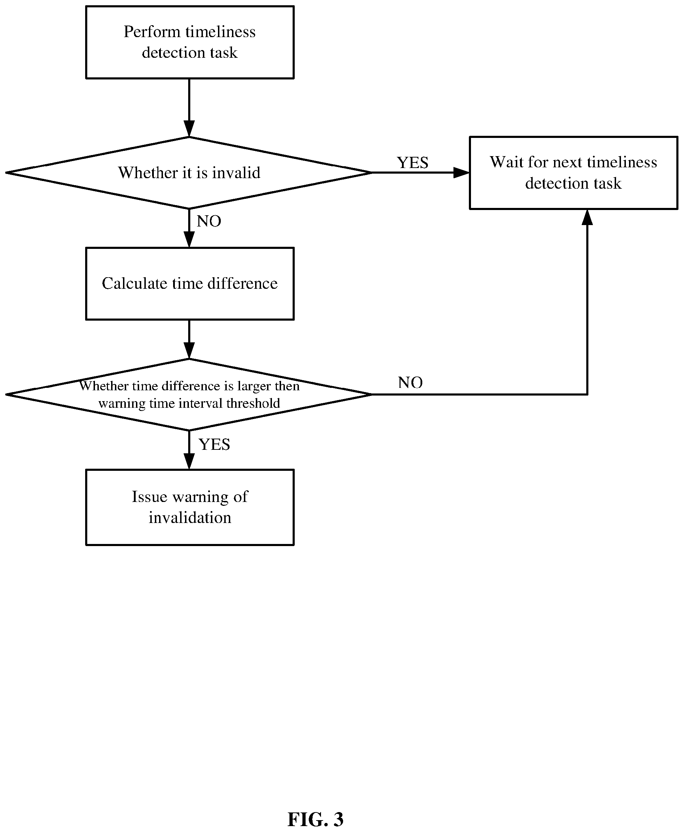

Referring to FIG. 3, in the disclosed implementation, when the central node performs the timeliness detection task, the content recorded in the third field of the feature information may be detected first. If the content recorded in the third field indicates that the traffic feature has already been invalid, the central node may not take any action, and thus end the pending timeliness detection task and wait for execution of the next timeliness detection task.

If the content recorded in the third field indicates that the traffic feature is still valid, the central node may then determine the time difference between the time point when the timeliness detection task is performed and the time point recorded in the first field. The larger the time difference, the greater the probability that the traffic feature is in an invalid state. In light of this, the determined time difference may be compared to the warning time interval threshold recorded in the second field. If the time difference is greater than the warning time interval threshold recorded in the second field, it indicates that the traffic feature has been in an un-triggered state for a long time, and the traffic feature may have already been invalid. At this moment, the central node may issue a warning of invalidation of the traffic feature to the management server, to allow the management server to further inspect the traffic feature based on the warning of invalidation. Meanwhile, the central node may also set the content in the third field to the content indicating that the traffic feature is currently invalid.

Through the foregoing processing steps, for the feature information of network traffic, the present disclosure may update the content in certain fields according to the real situations. In addition, through reading content currently recorded in each field, it may be determined whether the network traffic is in a valid state or not. When it is determined that the network traffic is in an invalid state, a warning of invalidation may be issued for the network traffic. Next, for the network traffic for which the warning of invalidation was issued, a validity inspection may be further performed.However, for the network traffic in a valid state, there is no need to perform a validity inspection. Therefore, a large amount of time is saved when compared with the existing technologies.

### Embodiment 2

The present disclosure further provides a central node server.The central node server may be a server or a server cluster comprising a plurality of servers, which is not limited by the present disclosure. The central node server runs a system for managing traffic features. The system for managing traffic features may implement the foregoing methods for managing traffic features.

Referring to FIG. 1, the present disclosure further provides an apparatus for managing traffic features. The apparatus includes a management server, a central node server, and at least one traffic identification device, where:
the management server is configured to issue traffic feature data to the central node server and each traffic identification device, receive a warning of invalidation sent by the central node server, and update the traffic feature data;
a traffic identification device is configured to identify locally received user traffic based on the traffic feature data, and report a matching traffic feature to the central node server when identification is successful; and
the central node server is configured to issue a warning of invalidation to the management server when an invalid traffic feature is detected.

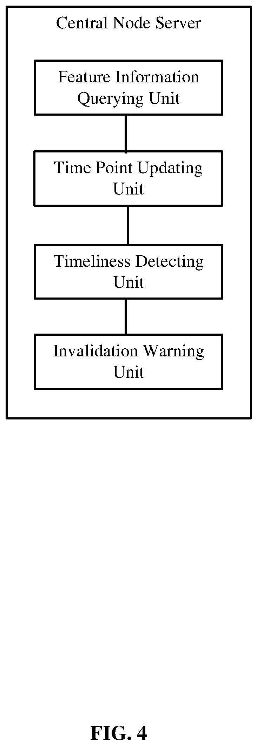

Referring to FIG. 4, in one implementation, the central node server includes:
a feature information querying unit that is configured to, after receiving a traffic feature sent by the traffic identification device, query feature information associated with the traffic feature, where the feature information includes at least a first field recording a time point of the latest successful verification of the traffic feature and a second field for recording a warning time interval threshold;
a time point updating unit that is configured to update content in the first field;
a timeliness detecting unit that is configured to perform a timeliness detection task for the traffic feature, and determine a time difference between a time point when the timeliness detection task is performed and a time point recorded in the first field; and
an invalidation warning unit that is configured to issue a warning of invalidation of the traffic feature if the determined time difference is greater than the warning time interval threshold recorded in the second field.

In one implementation, the time point updating unit is further configured to update the content in the first field to a time point when the traffic feature is received, or update the content in the first field to a time point when the traffic identification device reports the traffic feature, or update the content in the first field to a matching time point reported by the traffic identification device, where the matching time point indicates a time point when the traffic identification device successfully matches the traffic feature.

In one implementation, the feature information further includes a third field for indicating whether the traffic feature is valid; correspondingly, the central node server further includes:
a valid content updating unit that is configured to, after receiving the traffic feature sent by the traffic identification device, set content in the third field to content indicating that the traffic feature is currently valid.

In one implementation, the central node server further includes:
an invalid content updating unit that is configured to, after the warning of invalidation of the traffic feature is issued to the management server, set the content in the third field to content indicating that the traffic feature is currently invalid.

In one implementation, the central node server further includes:
a third field detecting unit that is configured to detect content recorded in the third field; correspondingly, if the content recorded in the third field indicates that the traffic feature is currently valid, the timeliness detecting unit then determines the time difference between the time point when the timeliness detection task is performed and the time point recorded in the first field.

In one implementation, the central node server further includes:
a periodical inspection task initiating unit that is configured to initiate a periodical inspection task, where the periodical inspection task, when executed, implements the timeliness detection task according to a specified time interval.

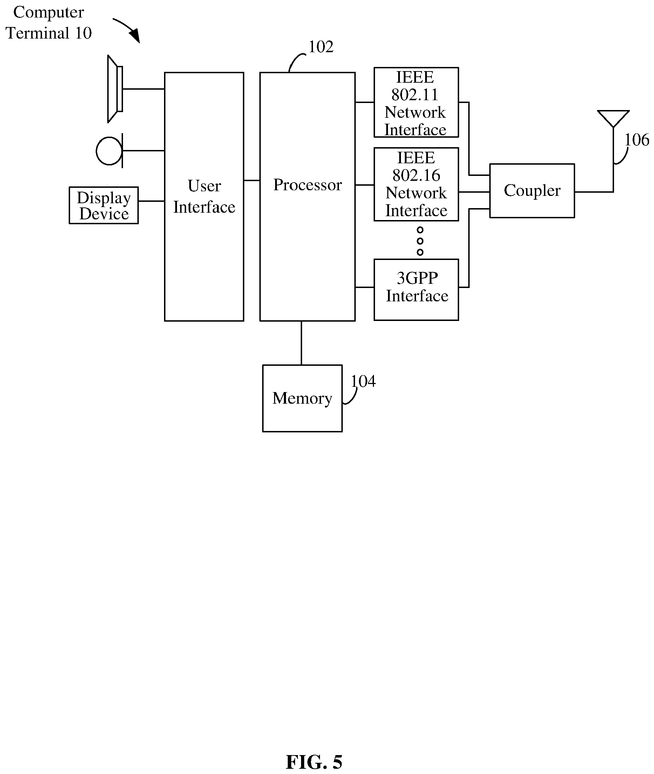

Referring to FIG. 5, in the present disclosure, the technical solutions in the foregoing embodiments may be applied to a computer terminal 10 as shown in FIG. 5. The computer terminal 10 may include one or more (only one of which is shown) processors 102 (a processor 102 may include, but is not limited to, a processing device such as a microprocessor MCU or a programmable logic device FPGA), a memory 104 for storing data, and a transmission module 106 for performing communication functions. A person of ordinary skill in the art may understand that the structure shown in FIG. 5 is merely illustrative, but does not limit the structure of the foregoing electronic devices. For example, the computer terminal 10 may also include more or fewer components than those shown in FIG. 5, or have a different configuration than that shown in FIG. 5.

The memory 104 may be used to store software programs and modules of application software. The processor 102 executes various functional applications and data processing by running the software programs and modules stored in the memory 104. The memory 104 may include high-speed random access memory, and also include non-volatile memory, such as one or more magnetic storage devices, flash memory, or other non-volatile solid state memory. In some examples, the memory 104 may further include memories that are remotely deployed relative to the processor 102.The remote memories may be coupled to the computer terminal 10 via a network. Examples of such network include, but are not limited to, the Internet, an intranet, a local area network, a mobile communication network, and combinations thereof.

The transmission device 106 is configured to receive or transmit data via a network. A specific example of the network may be a wireless network provided by a communication provider of the computer terminal 10. In one example, the transmission device 106 includes a Network Interface Controller (NIC) that may be connected to other network devices through a base station so as to communicate with the Internet. In one example, the transmission device 106 may be a Radio Frequency (RF) module that is configured to wirelessly communicate with the Internet.

As can be seen from the above, in the technical solutions provided by the present disclosure, a traffic feature generated by an application in a user client may be identified through a traffic identification device. In the present disclosure, different traffic may be uniquely represented by different feature identifiers. After identifying a feature identifier of the traffic feature, the traffic identification device may transmit the feature identifier to a central node server. The central node server may store feature information associated with various feature identifiers. The feature information may include multiple fields, where each field may be filled with different information. For example, the feature information may include a first field for recording a time point of the latest successful verification of a traffic feature and a second field for recording a warning time interval threshold. When determining whether the traffic feature is invalid, a timeliness detection task may be performed for the traffic feature, and a time difference between the time point when the timeliness detection task is performed and the time point recorded in the first field is determined. The time difference may be used to indicate an accumulated time length that the traffic feature has not been triggered by a user client. When the time difference is greater than the warning time interval threshold recorded in the second field, it indicates that the traffic feature has not been triggered by a user client for a long time, and this traffic feature may be already invalid. At this point, the central node server may issue a warning of invalidation of the traffic feature to the management server. Subsequently, the management server may perform a further validity inspection process for the traffic feature for which the warning of invalidation was issued. For the traffic for which no warning of invalidation is issued, the validity inspection process may not be performed. It can be seen that, by maintaining the feature information of the traffic and comparing the time difference, the present disclosure may determine traffic that may be invalid, and then perform a validity inspection for the traffic that may be invalid without necessarily performing a validity inspection for all traffic, thereby reducing the time used for the traffic inspection and improving efficiency of traffic inspection.

Through the foregoing description of the disclosed embodiments, a person skilled in the art may clearly understand that the respective embodiments may be implemented by means of software plus a necessary general hardware platform, and apparently, may be also implemented by hardware. In view of this understanding, the above-described technical solutions, or essentially the parts that contribute to the existing technologies, may be embodied in the form of software products. The software products may be stored in a computer-readable storage medium, such as ROM/RAM, magnetic disc, optical disc, etc., and include a series of instructions that are configured to cause a computer device (which may be a personal computer, server, or network device, etc.) to implement the methods described in the respective embodiments or portions of the embodiments.

Although the present disclosure has been described as above with reference to preferred embodiments, these embodiments are not constructed as limiting the present disclosure. Any modifications, equivalent replacements, and improvements made without departing from the spirit and principle of the present disclosure shall fall within the scope of the protection of the present disclosure.

## Claims

1. A method for managing traffic features, comprising:
after receiving a traffic feature sent by a traffic identification device, querying feature information associated with the traffic feature, wherein the feature information includes at least a first field for recording a time point of latest successful verification of the traffic feature and a second field for recording a warning time interval threshold, and updating content in the first field;
performing a timeliness detection task for the traffic feature, and determining a time difference between a time point when the timeliness detection task is performed and the time point recorded in the first field; and
if the time difference is greater than the warning time interval threshold recorded in the second field, issuing a warning of invalidation of the traffic feature to a management server, to allow the management server to update traffic feature data.

2. The method according to claim 1, wherein updating the content in the first field further includes:
updating the content in the first field to a time point when the traffic feature is received; or
updating the content in the first field to a time point when the traffic identification device reports the traffic feature; or
updating the content in the first field to a matching time point reported by the traffic identification device, wherein the matching time point indicates a time point when the traffic identification device successfully matches the traffic feature..

3. The method according to claim 1, wherein the feature information further includes a third field for indicating whether the traffic feature is valid, and, after receiving the traffic feature sent by the traffic identification device, the method further includes:
setting content in the third field to content indicating that the traffic feature is currently valid.

4. The method according to claim 3, wherein, after issuing the warning of invalidation of the traffic feature to the management server, the method further includes:
setting the content in the third field to content indicating that the traffic feature is currently invalid.

5. The method according to claim 3, wherein, before determining the time difference between the time point when the timeliness detection task is performed and the time point recorded in the first field, the method further includes:
detecting content recorded in the third field; and
if the content recorded in the third field indicates that the traffic feature is currently valid, determining the time difference between the time point when the timeliness detection task is performed and the time point recorded in the first field.

6. The method according to claim 1, wherein, before receiving the traffic feature sent by the traffic identification device, the method further includes:
initiating a periodical inspection task, wherein the periodical inspection task, when executed, implements the timeliness detection task according to a specified time interval.

7. A central node server, comprising a system for managing traffic features, wherein the system for managing traffic features implements the method according to any one of claims 1 to 6.

8. An apparatus for managing traffic features, comprising a management server, a central node server, and at least one traffic identification device, wherein:
the management server is configured to issue traffic feature data to the central node server and each traffic identification device, receive a warning of invalidation sent by the central node server, and update the traffic feature data;
a traffic identification device is configured to identify locally received user traffic based on the traffic feature data, and report a matching traffic feature to the central node server when identification is successful; and
the central node server is configured to issue a warning of invalidation to the management server when an invalid traffic feature is detected.

9. The apparatus according to claim 8, wherein the central node server includes:
a feature information querying unit that is configured to, after receiving a traffic feature sent by the traffic identification device, query feature information associated with the traffic feature, wherein the feature information includes at least a first field recording a time point of latest successful verification of the traffic feature and a second field for recording a warning time interval threshold;
a time point updating unit that is configured to update content in the first field;
a timeliness detecting unit that is configured to perform a timeliness detection task for the traffic feature, and determine a time difference between a time point when the timeliness detection task is performed and a time point recorded in the first field; and
an invalidation warning unit that is configured to issue a warning of invalidation of the traffic feature if the determined time difference is greater than the warning time interval threshold recorded in the second field.

10. The apparatus according to claim 9, wherein the time point updating unit is further configured to update the content in the first field to a time point when the traffic feature is received, or update the content in the first field to a time point when the traffic identification device reports the traffic feature, or update the content in the first field to a matching time point reported by the traffic identification device, wherein the matching time point indicates a time point when the traffic identification device successfully matches the traffic feature.

11. The apparatus according to claim 9, wherein the feature information further includes a third field for indicating whether the traffic feature is valid, and the central node server further includes:
a valid content updating unit that is configured to, after receiving the traffic feature sent by the traffic identification device, set content in the third field to content indicating that the traffic feature is currently valid.

12. The apparatus according to claim 11, wherein the central node server further includes:
an invalid content updating unit that is configured to, after the warning of invalidation of the traffic feature is issued to the management server, set the content in the third field to content indicating that the traffic feature is currently invalid.

13. The apparatus according to claim 11, wherein the central node server further includes:
a third field detecting unit that is configured to detect content recorded in the third field, and wherein, if the content recorded in the third field indicates that the traffic feature is currently valid, the timeliness detecting unit then determines the time difference between the time point when the timeliness detection task is performed and the time point recorded in the first field.

14. The apparatus according to claim 9, wherein the central node server further includes:
a periodical inspection task initiating unit that is configured to initiate a periodical inspection task, wherein the periodical inspection task, when executed, implements the timeliness detection task according to a specified time interval.
